# EUROPEAN PATENT SPECIFICATION

(11) **EP 4 335 751 B1**
(45) Date of publication and mention of the grant of the patent: **06.05.2026**
(21) Application number: 23195535.2
(22) Date of filing: 05.09.2023
(51) Int. Cl.: B64D 25/14

(54) **OFF-WING EVACUATION PACKBOARD COVER PANEL AND SOFT COVER RELEASE UTILIZING MAGNETOSTRICTION**
FLÜGELEXTERNE EVAKUIERUNGSPACKBRETTABDECKPLATTE UND FREISETZUNG EINER WEICHEN ABDECKUNG MITTELS MAGNETOSTRIKTION
PANNEAU DE COUVERTURE DE PANNEAU D'ÉVACUATION D'AILE EXTÉRIEURE ET LIBÉRATION DE COUVERCLE SOUPLE UTILISANT LA MAGNÉTOSTRICTION

(30) Priority: 09.09.2022 IN 202241051631; 11.11.2022 US 202217985391
(43) Date of publication of application: 13.03.2024
(73) Proprietor: Goodrich Corporation, Charlotte, NC 28217-4578 (US)
(72) Inventor: JNANEGOWDA, Vasantha Kumara, 560040 Bangalore, KA (IN); DESHAPANDE, Sunil, 560097 Bangalore, KA (IN)
(74) Representative: Dehns

(56) References cited:
- US-A1- 2005 001 704
- US-A1- 2020 010 204
- US-A1- 2021 230 906

## Description

### CROSS-REFERENCE TO RELATED APPLICATIONS

This application claims priority to India Patent Application No. 202241051631 (DAS CODE: A8B4), filed September 9, 2022, and titled "OFF-WING EVACUATION PACKBOARD COVER PANEL AND SOFT COVER RELEASE UTILIZING MAGNETOSTRICTION".

### FIELD

The present disclosure relates to systems and methods for off-wing evacuation systems, and more specifically, to utilizing magnetostriction to control a packboard cover and softcover release of an aircraft.

### BACKGROUND

Aircraft emergency landings often demand rapid evacuation of passengers from the aircraft due to potential injuries from fire, explosions, and sinking in water. Quickly evacuating passengers from an aircraft is performed with multiple emergency exits, each equipped with evacuation slides or slides/rafts. Evacuation slides or slides/rafts are needed to comply with aviation regulation and to ensure the safe evacuation of all passengers.

These evacuation slides or slides/rafts are normally stored in an uninflated condition in a packboard that occupies a small space in the interior of the aircraft. Door exit inflatable slides are typically mounted on the interior of the aircraft door or immediately adjacent to it. Over wing exits are normally stored in an uninflated condition in a special packboard compartment that opens to the exterior of the aircraft adjacent the over wing exit. The packboard compartment is closed by means of a packboard cover, hereinafter referred to as a blowout panel, that fits flush with and blends smoothly into the contours of an exterior of the aircraft. The blowout panel is retained to the packboard compartment by means of a plurality of releasable ball locks. Opening an aircraft emergency evacuation exit in an armed condition releases the releasable ball locks, allowing the blowout panel to fall away/unlock. Simultaneously, the emergency evacuation slide is inflated and extends to its deployed condition ready for evacuation of passengers.
US2020010204A1 relates generally to aircraft evacuation systems and, more particularly, to systems and methods for softcover attachment. In response to the emergency exit door of the aircraft opening, or in response to another evacuation event, the evacuation system may jettison a panel and deploy an inflatable slide. The panel covers a housing that comprises the inflatable slide. The inflatable slide is retained by a softcover. The softcover includes two fabric panels held together by lace that is configured in a series of loops with each loop extending through a lace aperture in the fabric panels and closed by a pin located in a final or "key" loop to prevent the lace from unfurling. The pin is slidably coupled to the lace such that the lace unlaces in response to a removal, or an uncoupling, of the pin from the lace and so doing allows the softcover to open. An actuator is positioned to translate (i.e., pull) the pin and release the inflatable slide.

### SUMMARY

A system for releasing a blowout panel and softcover release of an evacuation slide in an aircraft is provided as claimed in claim 1.

In various embodiments, the first actuator is a set of first actuators. In various embodiments, the first actuator further includes a compression spring, where the compression spring provides a compression spring force that holds the spindle against the first magnetostriction material. In various embodiments, the first actuator further includes a solenoid, where the solenoid generates a magnetic field in response to receiving the first signal and where the magnetic field magnetizes the first magnetostriction material thereby expanding the first magnetostriction material along the length of the first magnetostriction material in the first direction. In various embodiments, the first signal is a direct current signal.

In various embodiments, the second actuator further includes a compression spring, where the compression spring provides a compression spring force that holds the spindle against the second magnetostriction material. In various embodiments, the second actuator further includes a solenoid, where the solenoid generates a magnetic field in response to receiving the second signal and where the magnetic field magnetizes the second magnetostriction material thereby expanding the second magnetostriction material along the length of the second magnetostriction material in the first direction. In various embodiments, the second signal is a direct current signal.

Also disclosed herein is a method for releasing a blowout panel and softcover release of an evacuation slide in an aircraft as claimed in claim 6.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates an aircraft, in accordance with various embodiments.
FIG. 2 illustrates an evacuation slide assembly, in accordance with various embodiments.
FIG. 3 illustrates an evacuation slide assembly, in accordance with various embodiments.
FIG. 4 illustrates an exploded isometric view of the components of a ball lock assembly that includes a magnetostriction component, in accordance with various embodiments.
FIG. 5 illustrates a cross-sectional view of a ball lock assembly in a locked state, according to various embodiments.
FIG. 6 illustrates a cross-sectional view of a ball lock assembly in an unlocked/released state, according to various embodiments.
FIG. 7 illustrates an exploded isometric view of the components of a pull pin assembly for soft cover release that includes a magnetostriction component, according to various embodiments.
FIG. 8 illustrates a cross-sectional view of a pull pin assembly in a locked state, according to various embodiments.
FIG. 9 illustrates a cross-sectional view of a pull pin assembly in an unlocked/released state, according to various embodiments.
FIG. 10 illustrates properties of a magnetostriction material, according to various embodiments.
FIG. 11 illustrates a block diagram of a system for utilizing magnetostriction to control a blowout panel and softcover release of an aircraft, according to various embodiments.
FIG. 12 illustrates a method for utilizing magnetostriction to control a blowout panel and softcover release of an aircraft, according to various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the claims. Thus, the detailed description herein is presented for purposes of illustration only and not of limitation.

Existing evacuation slide release systems for the blowout panel and soft cover include a gas delivery manifold. The release source is pressurized gas from reservoir tank stored along with packboard compartment and the pressurized gas is configured to flow into delivery manifolds in response to an evacuation event. The ball locks associated with the blowout panel are configured to release the blowout panel and actuator pins associated with the softcover are configured to release the softcover covering the evacuation slide or slide/raft within the packboard compartment in response to pressurized gas flow to from the gas delivery manifolds.

However, future evacuation slide release systems may be configured to run on electricity instead of using compressed gas and sub-systems within the aircraft are planned to operate via an electric source, which means that gas delivery manifold release systems for blowout panels and soft covers needs to be replaced. Disclosed herein is a system and method for utilizing magnetostriction to control a packboard cover and softcover release of an aircraft. The system and method disclosed herein uses a magnetostriction component which has the property of ferromagnetic (materials that causes the magnetostriction component to change their shape or dimensions during the process of magnetization) and generates the magnetic field when electrically energized to achieve the functionality of the ball locks and actuator pins release system to replace the existing gas-based delivery manifold release system.

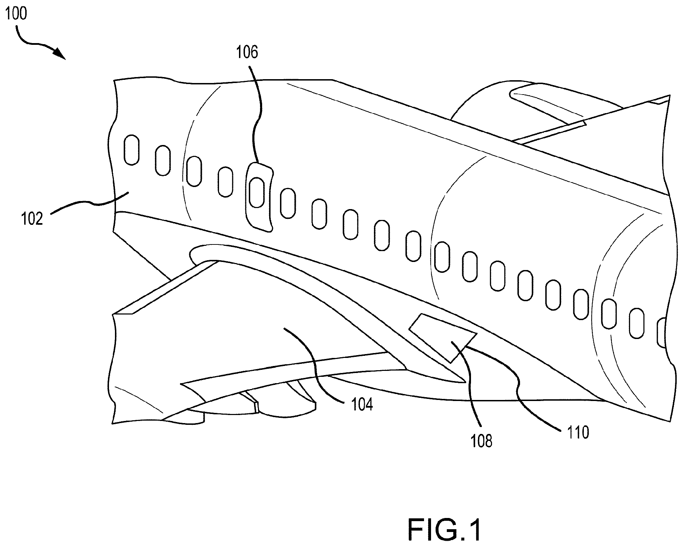

Referring now to FIG. 1, in accordance with various embodiments, an exemplary aircraft is illustrated. The aircraft 100 may include comprise a fuselage 102 with wings 104 fixed to fuselage 102. Emergency exit door 106 may be disposed on the fuselage 102 over the wings 104 such that passengers exiting emergency exit door 106 would exit onto wings 104. An evacuation slide assembly 108 may be disposed aft of emergency exit door 106. Blowout panel 110 covers evacuation slide assembly 108 when installed on the aircraft 100. In various embodiments, the evacuation slide assembly 108 may include and/or be housed within a packboard compartment to the aircraft 100.

The evacuation slide assembly 108 may jettison the blowout panel 110 and deploy an evacuation slide, such as an inflatable slide, in response to an activated emergency exit door 106 opening or in response to another evacuation event. The evacuation slide may be packed within and/or otherwise stored and/or retained within a soft cover. As described in greater detail below, the evacuation slide assembly 108 may include a release system that facilitates the deployment of the evacuation slide and the release of both the blowout panel 110 and the soft cover. In various embodiments, as described in greater detail below, the release system is actuated using a single power source, such as a magnetostriction component. In various embodiments, actuation of the release system, and thus deployment of the evacuation slide and the deployment/release of both the blowout panel 110 and the soft cover, may be non-electrically actuated.

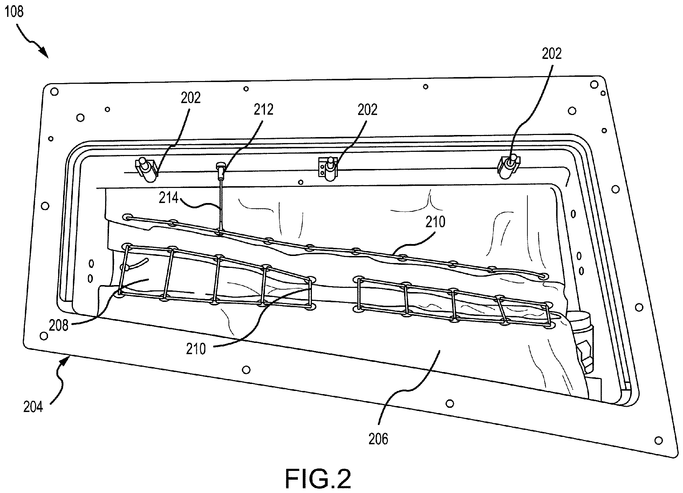

Referring now to FIG. 2, in accordance with various embodiments, an evacuation slide assembly is illustrated. In various embodiments, a first actuator 202 is configured to release the blowout panel 110 of the evacuation slide assembly 108 of FIG. 1 in response to an evacuation event. That is, the blowout panel 110 is at least partially retained in place by the first actuator 202 until an evacuation event. In response to the evacuation event, the first actuator 202 releases the blowout panel 110, thus allowing the blowout panel 110 to be jettisoned, in accordance with various embodiments. In various embodiments, the act of jettisoning of the blowout panel 110 may be accomplished indirectly via inflation of the evacuation slide.

In various embodiments, the first actuator 202 may include multiple actuators spaced apart from each other and distributed along a length of the packboard compartment 204. The first actuator 202 or first actuators are ball locks. The ball locks may engage a lip or other surface of the blowout panel 110 and thus may securely retain, or at least facilitate retaining, the blowout panel 110 in place over an opening to the packboard compartment 204. In response to an evacuation event, the first actuator 202 or first actuators release the blowout panel 110.

The packboard compartment 204 comprises a soft cover 206 containing evacuation slide 208. Soft cover 206 has lacing 210 to enclose the soft cover 206 and to retain the evacuation slide 208. The lacing 210 may be in a daisy chain or speed lacing configuration. The lacing 210 has a key-loop that, once released or unlocked, allows the remainder of the lacing 210 to be unfurled. Thus, in response to releasing the key-loop, the evacuation slide 208 is released.

A second actuator 212 is coupled to the lacing 210 and motivation of the second actuator 212, in response to an evacuation event, unlocks the key-loop of the lacing 210, thereby allowing the lacing 210 to be unfurled. In various embodiments, the lacing 210 may include a pin that locks the key-loop. The pin may be slidably coupled to the lacing 210 and may be coupled to the second actuator 212. Movement of the second actuator 212 may cause the pin 214 to translate or slide into the second actuator 212, thus unlocking the lacing 210.

The second actuator 212 may also include an arm that is configured to couple to the key-loop or pin of the lacing 210. The arm of the second actuator 212 may be in an extended position when an evacuation event is not occurring or when the evacuation system is disarmed. When the evacuation system is armed, in response to an evacuation event, the arm of the second actuator 212 retracts into a housing, thus sliding the pin or otherwise unlocking the key-loop of the lacing 210 to allow the lacing 210 to unfurl and release the evacuation slide 208 from the soft cover 206.

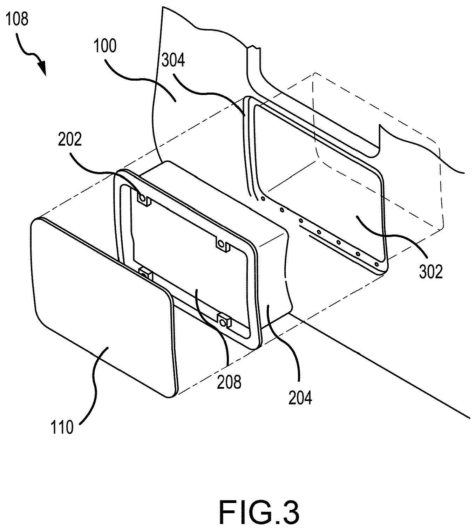

Referring now to FIG. 3, an evacuation slide assembly is illustrated. The evacuation slide assembly 108 includes the evacuation slide 208 stored in an uninflated condition within a packboard compartment 204. The packboard compartment 204 itself is secured within a recess 302 in the outer hull of the aircraft 100 and covered by the blowout panel 110 that is seated in reveal 304 so that the blowout panel 110 is flush with and conforms to the general contour of the outer hull of aircraft 100. The blowout panel 110 is secured to packboard compartment 204 by means of a first actuator 202 or set of first actuators the operation of which is explained more fully hereinafter.

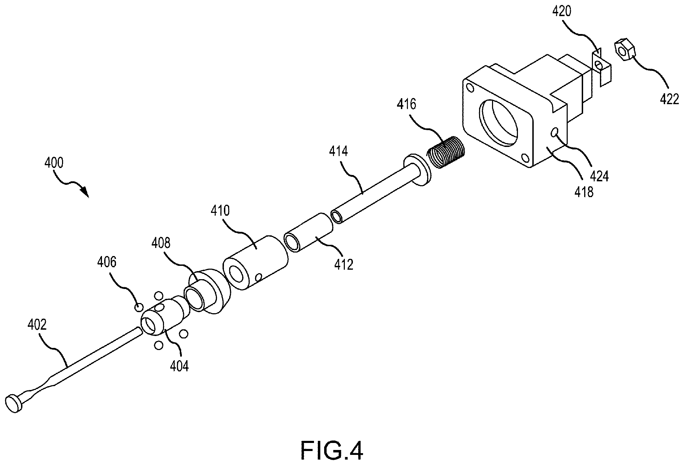

Referring now to FIG. 4, in accordance with the claims, an exploded isometric view of the components of a ball lock assembly that includes a magnetostriction component is illustrated. The ball lock assembly 400 of FIG. 4 is a first actuator such as the first actuator 202 of FIG. 2. In various embodiments, the ball lock assembly 400 includes a frangible rod 402, a nose 404, ball bearings 406, a nose fitting 408, a magnetostrictive housing 410, a drive rod 412, a spindle 414, a compression spring 416, an actuator housing 418, a washer 420, and a nut 422. In various embodiments, the magnetostrictive housing 410 includes a direct current solenoid that is coupled to a controller via an electrical cable connection 424. In various embodiments, the drive rod 412, which is configured to fit within the magnetostrictive housing 410, is comprised of the magnetostriction component. In various embodiments, the magnetostriction component is a ferromagnetic material such as Terfenol-D (an alloy including Terbium, Dysprosium, and Iron), Nickel, Alfer (Fe-Al alloy), Permalloy (Fe-Ni alloy), Cobalt-Nickel (Co-Ni alloy), Permendur (Co-Fe-V alloy); Cobalt Ferrite (CoFe₂O₄), Nickel Ferrite (NiFe₂O₄), the preceding with or without various rare earths and their alloys and compounds, among others. In various embodiments, the magnetostriction component has the property of a material that causes the material to change shape or dimensions during the process of magnetization. In various embodiments, in response to the controller, which is configured to provide a direct current signal to the direct current solenoid of the magnetostrictive housing 410 via the electrical cable connection 424, providing a direct current signal to the direct current solenoid, a magnetic field is generated that causes the drive rod 412 to change shape or dimensions.

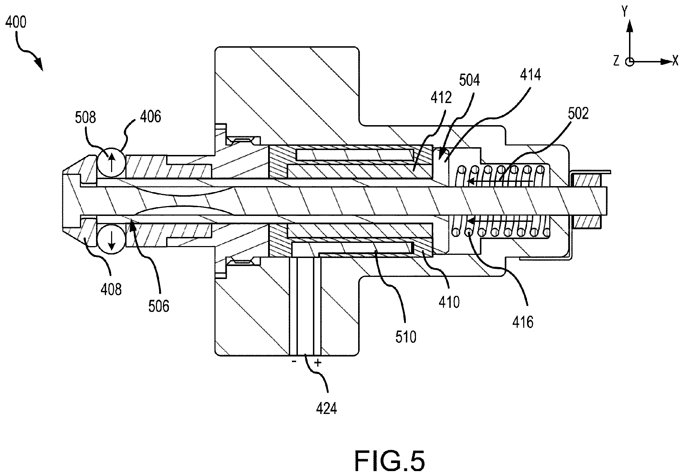

Referring now to FIG. 5, in accordance with the claims, a cross-sectional view of a ball lock assembly in a locked state is illustrated. The spindle 414 of the ball lock assembly 400 comprises a proximal end 504 and a distal end 506. In various embodiments, in the locked state, the compression spring 416 is in a default length state that applies a compression spring force 502 in a first direction, i.e., in a negative x-direction, to a first face of the proximal end 504 of the spindle 414. In various embodiments, the compression spring force 502 forces the distal end 506 of the spindle 414 to abut the nose fitting 408 which forces ball bearings 406 in an outward direction 508, i.e., a positive and negative y-direction. The drive rod 412 abuts a second face of the proximal end 504 of the spindle 414. In various embodiments, the magnetostriction material of the drive rod 412 is not exposed to a magnetic field from the direct current solenoid 510 within the magnetostrictive housing 410 due to no electrical signal being provided via the electrical cable connection 424 by the controller. In that regard, the magnetostriction material of the drive rod 412 is not electrically energized and in a non-magnetic phase. Accordingly, in various embodiments, a structure of the magnetostriction material of the drive rod 412 is randomly oriented and does not change its shape. In that regard, the length of the drive rod 412 does not change during non-magnetic phase and the spindle 414 stays in specified position due to the compression spring force 502 and ensures that ball bearings 406 protrude outside the periphery of the nose fitting 408. Thus, the ball lock assembly 400 retains the blowout panel 110 of FIG. 1 within the desired position.

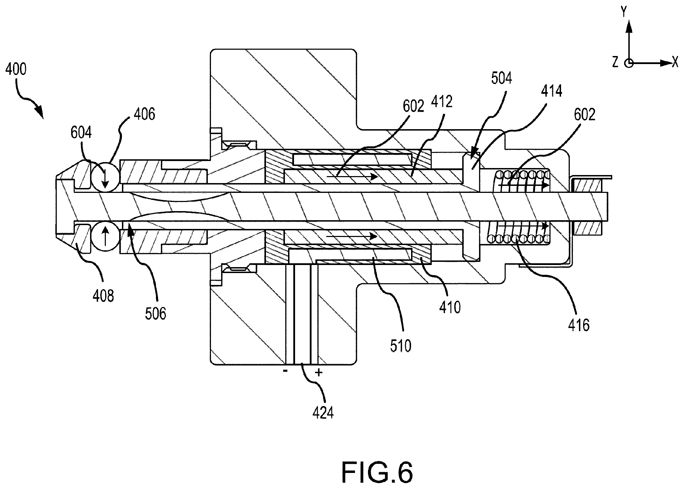

Referring now to FIG. 6, in accordance with the claims, a cross-sectional view of a ball lock assembly in an unlocked/released state is illustrated. In various embodiments, in the unlocked/released state of the ball lock assembly 400, the controller is configured to provide an electrical signal to the direct current solenoid 510 within the magnetostrictive housing 410 via the electrical cable connection 424. In various embodiments, with the provided electrical signal, the direct current solenoid 510 generates a magnetic field onto the drive rod 412. In various embodiments, during the magnetic field phase, a structure of the magnetostriction material in the drive rod 412 changes orientation. In various embodiments, the orientation change imposed by the magnetic field generated by the direct current solenoid 510 creates a strain field in the magnetostriction material of the drive rod 412 and, as the intensity of the magnetic field is increased, more and more magnetic domains of magnetostriction material orientate themselves so that their principle axes of anisotropy are collinear with the magnetic field in each region and finally saturation is achieved. In various embodiments, the effect of this material property change in the magnetostriction material of the drive rod 412 during magnetic field phase causes the drive rod 412 to increase in length in a second direction 602 opposite to the compression spring force 502 of FIG. 5, i.e., in a positive x-direction, which increases a length of the drive rod 412 from its original length by reducing its diameter respectively.

The elongation of the drive rod 412 in the second direction 602 causes the drive rod 412, which abuts the second face of the proximal end 504 of the spindle 414, to force the spindle 414 to translate in the second direction 602, i.e., in the positive x-direction, which compresses the compression spring 416 in the second direction 602, i.e., in the positive x-direction. In that regard, the longitudinal strain of in the magnetostriction material of the drive rod 412 produces the tensile force which creates the pushing force on the second face of the proximal end 504 of the spindle 414. Accordingly, due to this push force from drive rod 412, the proximal end 504 of the spindle 414 translates towards the compression spring 416 due to increase length of the drive rod 412. In various embodiments, the increased length of drive rod 412 generates a force that is higher than the compression spring force 502 such that the distal end 506 of the spindle 414 gradually moves away from a position of the ball bearings 406. In that regard, the displacement of the spindle 414 allows the ball bearings 406 to retract in an inward direction 604 opposite the outward direction 508 of FIG. 5, i.e., a negative and positive y-direction, to inside the periphery of the nose fitting 408. Accordingly, this process allows the blowout panel 110 of FIG. 1 to release from its locked position as the ball bearings 406 being retracted provides space for cover panel to move from a locked position.

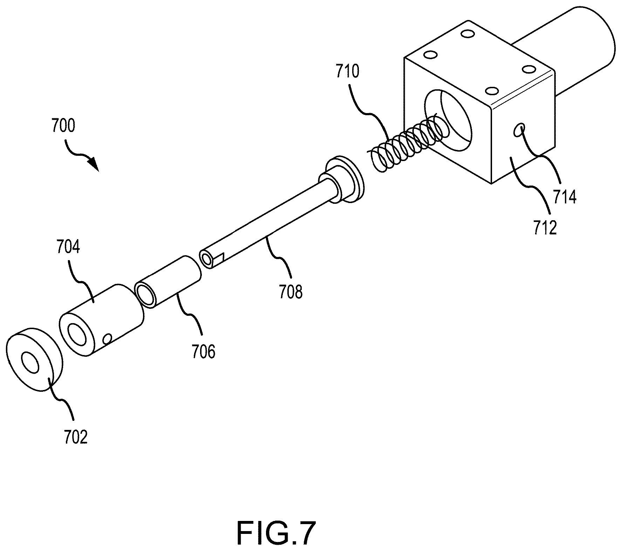

Referring now to FIG. 7, in accordance with the claims, an exploded isometric view of the components of a pull pin assembly for soft cover release that includes a magnetostriction component is illustrated. The pull pin assembly 700 of FIG. 7 is a second actuator such as the second actuator 212 of FIG. 2. In various embodiments, the pull pin assembly 700 includes a nose fitting 702, a magnetostrictive housing 704, a drive rod 706, a spindle 708, a compression spring 710, and an actuator housing 712. In various embodiments, the magnetostrictive housing 704 includes a direct current solenoid that is coupled to a controller via an electrical cable connection 714. In various embodiments, the drive rod 706, which is configured to fit within the magnetostrictive housing 704, is comprised of the magnetostriction component. In various embodiments, the magnetostriction component is a ferromagnetic material such as Terfenol-D (an alloy including Terbium, Dysprosium, and Iron), Nickel, Alfer (Fe-Al alloy), Permalloy (Fe-Ni alloy), Cobalt-Nickel (Co-Ni alloy), Permendur (Co-Fe-V alloy); Cobalt Ferrite (CoFe₂O₄), Nickel Ferrite (NiFe₂O₄), the preceding with or without various rare earths and their alloys and compounds, among others. In various embodiments, the magnetostriction component has the property of a material that causes the material to change shape or dimensions during the process of magnetization. In various embodiments, in response to the controller, which is configured to provide a direct current signal to the direct current solenoid of the magnetostrictive housing 704 via the electrical cable connection 714, providing a direct current signal to the direct current solenoid, a magnetic field is generated that causes the drive rod 706 to change shape or dimensions.

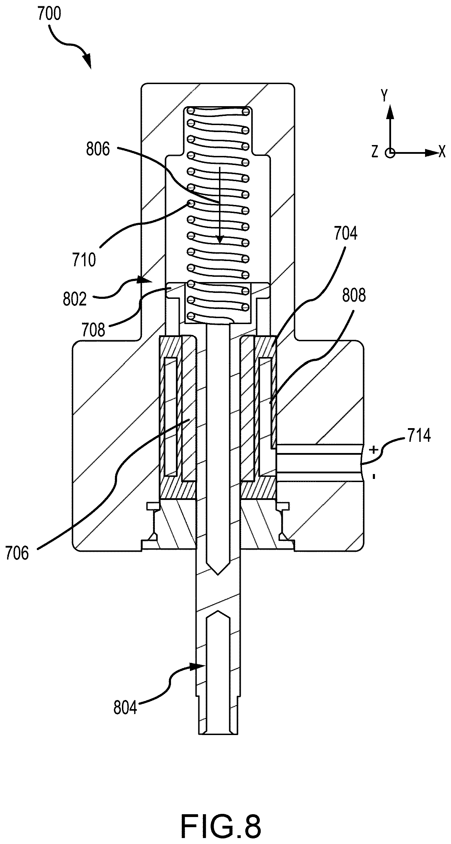

Referring now to FIG. 8, in accordance with the claims, a cross-sectional view of a pull pin assembly in a locked state is illustrated. In various embodiments, the spindle 708 of the pull pin assembly 700 comprises a proximal end 802 and a distal end 804. In various embodiments, in the locked state, the compression spring 710 is in a default length state that applies a compression spring force 806 in a first direction, i.e., in a negative y-direction, to a first face of the proximal end 802 of the spindle 708. In various embodiments, the compression spring force 806 forces a second face of the proximal end 802 of the spindle 708 to abut a first end of the drive rod 706. In various embodiments, the magnetostriction material of the drive rod 706 is not exposed to a magnetic field from a direct current solenoid 808 within the magnetostrictive housing 704 due to no electrical signal being provided via the electrical cable connection 714 by the controller. In that regard, the magnetostriction material of the drive rod 706 is not electrically energized and in a non-magnetic phase. Accordingly, in various embodiments, a structure of the magnetostriction material of the drive rod 706 is randomly oriented and does not change its shape. In that regard, the length of the drive rod 706 does not change during non-magnetic phase and the spindle 708 stays in specified position due to the compression spring force 806. Accordingly, the distal end 804 of the spindle 708, which is coupled to the lacing loops of the soft cover 206 of FIG. 2 stays intact with the lacing 210 of FIG. 2 and thus, does not release lacing 210 of the soft cover 206.

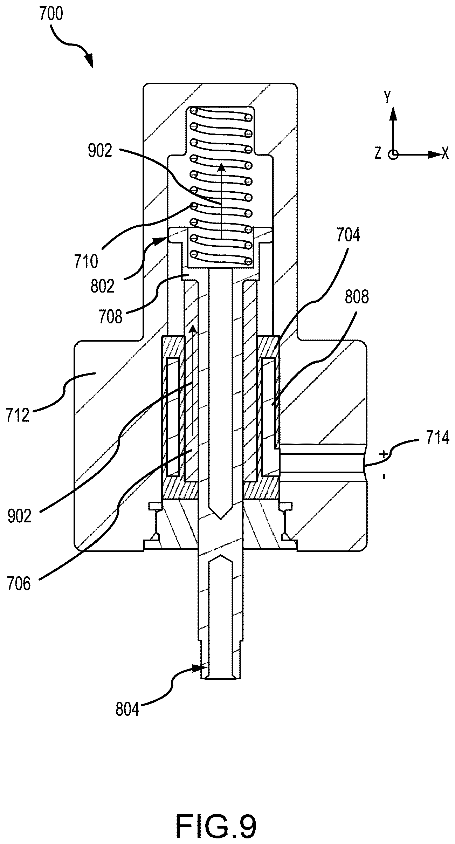

Referring now to FIG. 9, in accordance with the claims, a cross-sectional view of a pull pin assembly in an unlocked/released state is illustrated. In various embodiments, in the unlocked/released state of the pull pin assembly 700, the controller is configured to provide an electrical signal to the direct current solenoid 808 within the magnetostrictive housing 704 via the electrical cable connection 714. In various embodiments, with the provided electrical signal, the direct current solenoid 808 generates a magnetic field onto the drive rod 706. In various embodiments, during the magnetic field phase, a structure of the magnetostriction material in the drive rod 706 changes orientation. In various embodiments, the orientation change imposed by the magnetic field generated by the direct current solenoid 808 creates a strain field in the magnetostriction material of the drive rod 706 and, as the intensity of the magnetic field is increased, more and more magnetic domains of magnetostriction material orientate themselves so that their principle axes of anisotropy are collinear with the magnetic field in each region and finally saturation is achieved. In various embodiments, the effect of this material property change in the magnetostriction material of the drive rod 706 during magnetic field phase causes the drive rod 706 to increase in length in a second direction 902 opposite to the compression spring force 806 of FIG. 5, i.e., in a positive y-direction, which increases a length of the drive rod 706 from its original length by reducing its diameter respectively.

The elongation of the drive rod 706 in the second direction 902 causes the drive rod 706, which abuts the second face of the proximal end 802 of the spindle 708, to force the spindle 708 to translate in the second direction 902, i.e., in the positive y-direction, which compresses the compression spring 710 in the second direction 902, i.e., in the positive y-direction. In that regard, the longitudinal strain of in the magnetostriction material of the drive rod 706 produces the tensile force which creates the pushing force on the second face of the proximal end 802 of the spindle 708. Accordingly, due to this push force from drive rod 706, the proximal end 802 of the spindle 708 translates towards the compression spring 710 due to increase length of the drive rod 706. In various embodiments, the increased length of drive rod 706 generates a force that is higher than the compression spring force 806 such that the distal end 804 of the spindle 708 gradually moves into the actuator housing 712. In that regard, the displacement of the spindle 708 pulls the lacing 210 that is coupled to the distal end 804 of the spindle 708 thereby untying the lacing 210 of the soft cover 206 and facilitate the deployment of an evacuation slide.

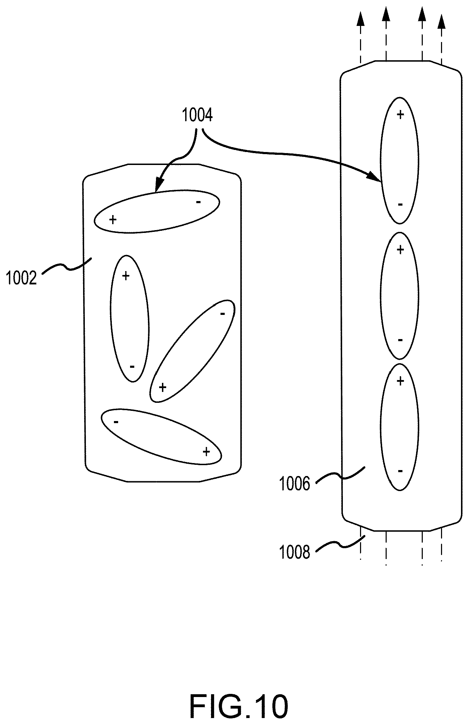

Referring now to FIG. 10, in accordance with various embodiments, properties of a magnetostriction material is illustrated. In non-magnetized magnetostriction material 1002, i.e., magnetostriction material that has not been exposed to an electrical signal and is in a non-magnetic phase, magnetic dipoles 1004 within the non-magnetized magnetostriction material 1002 are randomly oriented. In a magnetized magnetostriction material 1006, i.e., magnetostriction material that has been exposed to an electrical signal and is in magnetic phase, magnetic dipoles 1004 orientate themselves so that their principle axes of anisotropy are collinear with magnetic field 1008 in each region until saturation is achieved. In various embodiments, the effect of this material property change in the magnetized magnetostriction material 1006 during magnetic field phase causes the magnetostriction material 1006 to increase in length and decrease in width.

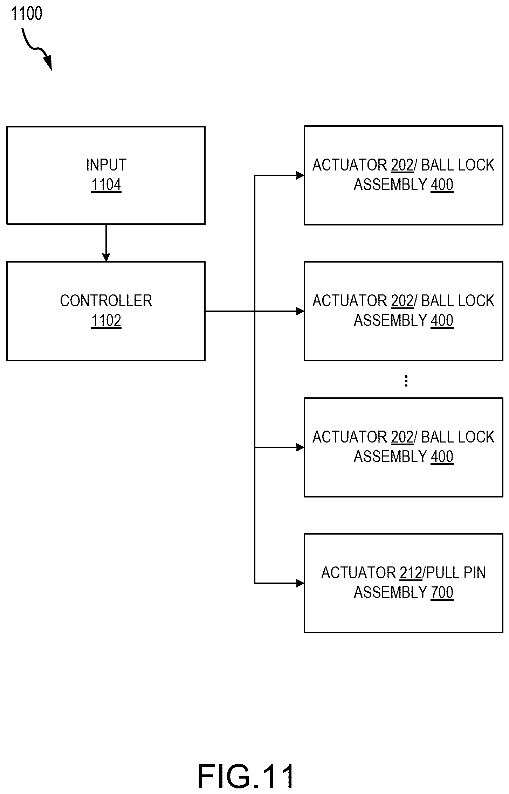

Referring now to FIG. 11, in accordance with various embodiments, a block diagram of a system for utilizing magnetostriction to control a blowout panel and softcover release of an aircraft is illustrated. In various embodiments, controller 1102 receives input 1104 of an activated emergency exit door being opened, a signal from the cockpit of the aircraft, or other evacuation event, among others, that an evacuation event has begun. In response to the indication of an evacuation event, the controller 1102 is configured to provide a direct current signal to one or more first actuators, such as first actuator 202 of FIG. 2 or ball lock assembly 400 of FIGs. 4-6, the one or more first actuators operating in the manner described with respect to FIGs. 4-6. Additionally, in response to the indication of an evacuation event, the controller 1102 is configured to provide a direct current signal to a second actuator, such as the second actuator 212 of FIG. 2 or pull pin assembly 700 of FIGs. 7-9, the second actuator operating in the manner described with respect to FIG.s 7-9.

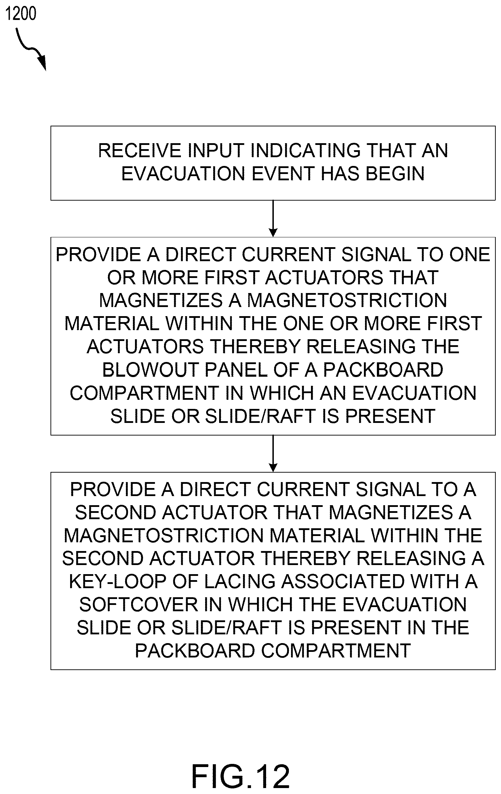

Referring now to FIG. 12, in accordance with the claims, a method for utilizing magnetostriction to control a blowout panel and softcover release of an aircraft is illustrated. The method 1200 may be performed by a controller 1102 described above with respect to FIG. 11. The controller 1102 receives input of an activated emergency exit door being opened, a signal from the cockpit of the aircraft, or other evacuation event, among others, that an evacuation event is has begun. Responsive to receiving input indicating an evacuation event, the controller 1102 is configured to provide a direct current signal to one or more first actuators that magnetizes a magnetostriction material within the one or more first actuators thereby releasing the blowout panel of a packboard compartment in which an evacuation slide or slide/raft is present. Responsive to receiving input indicating an evacuation event, the controller 1102 is configured to provide a direct current signal to a second actuator that magnetizes a magnetostriction material within the second actuator thereby releasing a key-loop of lacing associated with a softcover in which the evacuation slide or slide/raft is present in the packboard compartment.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Although various embodiments have been disclosed and described, one of ordinary skill in this art would recognize that certain modifications would come within the scope of the claims. Accordingly, the description is not intended to be exhaustive or to limit the principles described or illustrated herein to any precise form.

## Claims

1. A system for releasing a blowout panel (110) and softcover (206) release of an evacuation slide in an aircraft, the system comprising:
the blowout panel (110);
the soft cover (206), the soft cover including key-loop lacing (210);
a first actuator (202, 400), wherein the first actuator (400) comprises:
a first drive rod (412) comprising a first magnetostriction material;
a nose fitting (408);
a first spindle (414), wherein the first drive rod (412) abuts a face of a proximal end the first spindle (414), wherein the first spindle (414) is slidable within the nose fitting (408); and
a set of ball bearings (406) comprised in the nose fitting (408), wherein the first magnetostriction material of the first drive rod (412) is configured to, when magnetized, expand along a length of the first magnetostriction material in a first direction forcing the first spindle (414) to translate in the first direction thereby allowing the set of ball bearings (406) holding the blowout panel (110) in place to translate in a second direction perpendicular to the first direction due to a distal end of the first spindle (414) moving in the first direction and allowing the set of ball bearings (406) to retract inward in the second direction to inside the periphery of the nose fitting (408) thereby releasing the blowout panel;
a second actuator (212, 700), wherein the second actuator (700) comprises:
a second drive rod (706) comprising a second magnetostriction material ;
and
a second spindle (708), wherein the second drive rod (706) abuts a face of a proximal end the second spindle (708), wherein the second magnetostriction material of the second drive rod (706) is configured to, when magnetized, expand along a length of the second magnetostriction material in a third direction forcing the second spindle (708) to translate in the third direction thereby pulling the key-loop of the lacing (210) coupled to a distal end of the second spindle (708) thereby untying the key-loop of lacing (210) associated with the softcover; and a controller, wherein the controller is configured to:
receive an indication that an evacuation event has begun; and
responsive to receiving the indication of the evacuation event has begun:
send a first signal to the first actuator that magnetizes the first magnetostriction material within the first actuator, thereby releasing the blowout panel of a packboard compartment (204) in which the evacuation slide is present, and
send a second signal to the second actuator that magnetizes the second magnetostriction material within the second actuator, thereby releasing the key-loop of lacing (210) associated with the softcover in which the evacuation slide is present in the packboard compartment.

2. The system of claim 1, wherein the first actuator (202, 400) is a set of first actuators.

3. The system of claim 1 or 2, wherein the first actuator (400) further comprises:
a compression spring (602), wherein the compression spring provides a compression spring force that holds the spindle (414) against the first magnetostriction material; and/or wherein the first actuator further comprises:
a solenoid (510), wherein the solenoid generates a magnetic field in response to receiving the first signal and wherein the magnetic field magnetizes the first magnetostriction material thereby expanding the first magnetostriction material along the length of the first magnetostriction material in the first direction.

4. The system of any preceding claim, wherein the first signal is a direct current signal, and/or wherein the second signal is a direct current signal.

5. The system of any preceding claim, wherein the second actuator further comprises:
a compression spring (710), wherein the compression spring provides a compression spring force that holds the spindle (708) against the second magnetostriction material (704); and/or wherein the second actuator further comprises:
a solenoid, wherein the solenoid generates a magnetic field in response to receiving the second signal and wherein the magnetic field magnetizes the second magnetostriction material thereby expanding the second magnetostriction material along the length of the second magnetostriction material in the first direction.

6. A method (1200) for releasing a blowout panel and softcover release of an evacuation slide in an aircraft, the method comprising:
providing a system for releasing a blowout panel (110) and the softcover (206) release of an evacuation slide in an aircraft according to any preceding claim;
receiving, by the controller, an indication that an evacuation event has begun; and
responsive to receiving the indication of the evacuation event beginning:
sending, by the controller, the first signal to the first actuator that magnetizes the first magnetostriction material within the first actuator, thereby releasing the blowout panel of the packboard compartment in which the evacuation slide is present;
and
sending, by the controller, the second signal to the second actuator that magnetizes the second magnetostriction material within the second actuator, thereby releasing the key-loop of lacing associated with the softcover in which the evacuation slide is present in the packboard compartment.

## Patentansprüche

1. System zum Auslösen einer Druckausgleichsplatte (110) und Auslösen einer weichen Abdeckung (206) einer Evakuierungsrutsche in einem Luftfahrzeug, wobei das System Folgendes umfasst:
die Druckausgleichsplatte (110);
die weiche Abdeckung (206), die weiche Abdeckung einschließlich Schlüsselschlaufen-Schnürung (210);
einen ersten Aktor (202, 400), wobei der erste Aktor (400) Folgendes umfasst:
eine erste Antriebsstange (412), umfassend ein erstes Magnetostriktionsmaterial;
eine Klemmringverschraubung (408);
eine erste Spindel (414), wobei die erste Antriebsstange (412) an eine Fläche eines proximalen Endes der ersten Spindel (414) angrenzt, wobei die erste Spindel (414) innerhalb der Klemmringverschraubung (408) verschiebbar ist; und
einen Satz Kugellager (406), der in der Klemmringverschraubung (408) umfasst ist, wobei das erste Magnetostriktionsmaterial der ersten Antriebsstange (412) dazu konfiguriert ist, sich, wenn es magnetisiert wird, entlang einer Länge des ersten Magnetostriktionsmaterials in einer ersten Richtung auszudehnen und die erste Spindel (414) zum Verschieben in die erste Richtung zu zwingen, wodurch sich der Satz Kugellager (406), der die Druckausgleichsplatte (110) an ihrem Platz hält, aufgrund der Bewegung eines distalen Endes der ersten Spindel (414) in der ersten Richtung in eine zweite Richtung senkrecht zur ersten Richtung verschieben kann und sich der Satz Kugellager (406) in der zweiten Richtung nach innen in die Peripherie der Klemmringverschraubung (408) zurückziehen kann, wodurch die Druckausgleichsplatte ausgelöst wird;
einen zweiten Aktor (212, 700), wobei der zweite Aktor (700) Folgendes umfasst:
eine zweite Antriebsstange (706), umfassend ein zweites Magnetostriktionsmaterial; und
eine zweite Spindel (708), wobei die zweite Antriebsstange (706) an eine Fläche eines proximalen Endes der zweiten Spindel (708) angrenzt, wobei das zweite Magnetostriktionsmaterial der zweiten Antriebsstange (706) dazu konfiguriert ist, sich, wenn es magnetisiert wird, entlang einer Länge des zweiten Magnetostriktionsmaterials in einer dritten Richtung auszudehnen und die zweite Spindel (708) zum Verschieben in die dritte Richtung zu zwingen, wodurch die Schlüsselschlaufe der Schnürung (210), die mit einem distalen Ende der zweiten Spindel (708) verbunden ist, gezogen wird, wodurch die mit der weichen Abdeckung verbundene Schlüsselschlaufe der Schnürung (210) gelöst wird; und eine Steuerung, wobei die Steuerung konfiguriert ist zum:
Empfangen einer Angabe, dass ein Evakuierungsereignis begonnen hat; und
Reagieren auf den Empfang der Angabe über den Beginn des Evakuierungsereignisses:
Senden eines ersten Signals an den ersten Aktor, der das erste Magnetostriktionsmaterial innerhalb des ersten Aktors magnetisiert, wodurch die Druckausgleichsplatte eines Packbrett-Fachs (204), in dem sich die Evakuierungsrutsche befindet, ausgelöst wird, und
Senden eines zweiten Signals an den zweiten Aktor, der das zweite Magnetostriktionsmaterial innerhalb des zweiten Aktors magnetisiert, wodurch die Schlüsselschlaufe der Schnürung (210), die mit der weichen Abdeckung verbunden ist, in der sich die Evakuierungsrutsche im Packbrett-Fach befindet, ausgelöst wird.

2. System nach Anspruch 1, wobei der erste Aktor (202, 400) ein Satz erster Aktoren ist.

3. System nach Anspruch 1 oder 2, wobei der erste Aktor (400) ferner Folgendes umfasst:
eine Druckfeder (602), wobei die Druckfeder eine Druckfederkraft bereitstellt, die die Spindel (414) gegen das erste Magnetostriktionsmaterial hält; und/oder wobei der erste Aktor ferner Folgendes umfasst:
eine Spule (510), wobei die Spule als Reaktion auf den Empfang des ersten Signals ein Magnetfeld erzeugt und wobei das Magnetfeld das erste Magnetostriktionsmaterial magnetisiert und dadurch das erste Magnetostriktionsmaterial entlang der Länge des ersten Magnetostriktionsmaterials in der ersten Richtung ausdehnt.

4. System nach einem der vorhergehenden Ansprüche, wobei das erste Signal ein Gleichstromsignal ist und/oder wobei das zweite Signal ein Gleichstromsignal ist.

5. System nach einem der vorhergehenden Ansprüche, wobei der zweite Aktor ferner umfasst:
eine Druckfeder (710), wobei die Druckfeder eine Druckfederkraft bereitstellt, die die Spindel (708) gegen das zweite Magnetostriktionsmaterial (704) hält; und/oder wobei der zweite Aktor ferner Folgendes umfasst:
eine Spule, wobei die Spule als Reaktion auf den Empfang des zweiten Signals ein Magnetfeld erzeugt und wobei das Magnetfeld das zweite Magnetostriktionsmaterial magnetisiert und dadurch das zweite Magnetostriktionsmaterial entlang der Länge des zweiten Magnetostriktionsmaterials in der ersten Richtung ausdehnt.

6. Verfahren (1200) zum Auslösen einer Druckausgleichsplatte und zum Auslösen einer weichen Abdeckung einer Evakuierungsrutsche in einem Flugzeug, wobei das Verfahren Folgendes umfasst:
Bereitstellen eines Systems zum Auslösen einer Druckausgleichsplatte (110) und Auslösen der weichen Abdeckung (206) einer Evakuierungsrutsche in einem Luftfahrzeug gemäß einem der vorhergehenden Ansprüche;
Empfangen, durch die Steuerung, einer Angabe, dass ein Evakuierungsereignis begonnen hat; und
Reagieren auf den Empfang der Angabe über den Beginn des Evakuierungsereignisses:
Senden, durch die Steuerung, des ersten Signals an den ersten Aktor, der das erste Magnetostriktionsmaterial innerhalb des ersten Aktors magnetisiert, wodurch die Druckausgleichsplatte des Packbrett-Fachs, in dem sich die Evakuierungsrutsche befindet, ausgelöst wird;
und
Senden, durch die Steuerung, des zweiten Signals an den zweiten Aktor, der das zweite Magnetostriktionsmaterial innerhalb des zweiten Aktors magnetisiert, wodurch die Schlüsselschlaufe der Schnürung, die mit der weichen Abdeckung verbunden ist, in der sich die Evakuierungsrutsche im Packbrett-Fach befindet, ausgelöst wird.

## Revendications

1. Système de libération d'un panneau (110) éjectable et d'un couvercle (206) souple d'une glissière d'évacuation dans un aéronef, le système comprenant :
le panneau (110) éjectable ;
le couvercle (206) souple, le couvercle souple comportant un laçage (210) à boucle clé ;
un premier actionneur (202, 400), dans lequel le premier actionneur (400) comprend :
une première tige (412) d'entraînement comprenant un premier matériau de magnétostriction ;
un raccord (408) avant ;
une première broche (414), dans laquelle la première tige (412) d'entraînement vient en butée contre une face d'une extrémité proximale de la première broche (414), dans laquelle la première broche (414) est coulissante à l'intérieur du raccord (408) avant ; et
un ensemble de roulements (406) à billes compris dans le raccord (408) avant, dans lequel le premier matériau de magnétostriction de la première tige (412) d'entraînement est configuré pour, lorsqu'il est magnétisé, se dilater sur une longueur du premier matériau de magnétostriction dans une première direction forçant la première broche (414) à se déplacer dans la première direction, permettant ainsi à l'ensemble de roulements (406) à billes maintenant le panneau (110) éjectable en place de se déplacer dans une deuxième direction perpendiculaire à la première direction en raison d'une extrémité distale de la première broche (414) se déplaçant dans la première direction et permettant à l'ensemble de roulements (406) à billes de se rétracter vers l'intérieur dans la deuxième direction à l'intérieur de la périphérie du raccord (408) avant, libérant ainsi le panneau éjectable ;
un second actionneur (212, 700), dans lequel le second actionneur (700) comprend :
une seconde tige (706) d'entraînement comprenant un second matériau de magnétostriction ; et
une seconde broche (708), dans laquelle la seconde tige (706) d'entraînement vient en butée contre une face d'une extrémité proximale de la seconde broche (708), dans laquelle le second matériau de magnétostriction de la seconde tige (706) d'entraînement est configuré pour, lorsqu'il est magnétisé, se dilater sur une longueur du second matériau de magnétostriction dans une troisième direction, forçant ainsi la seconde broche (708) à se déplacer dans la troisième direction, tirant ainsi sur la boucle clé du laçage (210) couplée à une extrémité distale de la seconde broche (708) et dénouant ainsi la boucle clé du laçage (210) associée au couvercle souple ; et un dispositif de commande, dans lequel le dispositif de commande est configuré pour :
recevoir une indication qu'une opération d'évacuation a commencé ; et
en réponse à la réception de l'indication que l'opération d'évacuation a commencé :
envoyer un premier signal au premier actionneur qui magnétise le premier matériau de magnétostriction à l'intérieur du premier actionneur, libérant ainsi le panneau éjectable d'un compartiment (204) de panneau dans lequel se trouve la glissière d'évacuation, et
envoyer un second signal au second actionneur qui magnétise le second matériau de magnétostriction à l'intérieur du second actionneur, libérant ainsi la boucle clé de laçage (210) associée au couvercle souple dans lequel se trouve la glissière d'évacuation dans le compartiment de panneau.

2. Système selon la revendication 1, dans lequel le premier actionneur (202, 400) est un ensemble de premiers actionneurs.

3. Système selon la revendication 1 ou 2, dans lequel le premier actionneur (400) comprend en outre :
un ressort (602) de compression, dans lequel le ressort de compression fournit une force de ressort de compression qui maintient la broche (414) contre le premier matériau de magnétostriction ; et/ou dans lequel le premier actionneur comprend en outre :
un solénoïde (510), dans lequel le solénoïde génère un champ magnétique en réponse à la réception du premier signal et dans lequel le champ magnétique magnétise le premier matériau de magnétostriction, dilatant ainsi le premier matériau de magnétostriction sur la longueur du premier matériau de magnétostriction dans la première direction.

4. Système selon une quelconque revendication précédente, dans lequel le premier signal est un signal de courant continu, et/ou dans lequel le second signal est un signal de courant continu.

5. Système selon une quelconque revendication précédente, dans lequel le second actionneur comprend en outre :
un ressort (710) de compression, dans lequel le ressort de compression fournit une force de ressort de compression qui maintient la broche (708) contre le second matériau (704) de magnétostriction ; et/ou dans lequel le second actionneur comprend en outre :
un solénoïde, dans lequel le solénoïde génère un champ magnétique en réponse à la réception du second signal et dans lequel le champ magnétique magnétise le second matériau de magnétostriction, dilatant ainsi le second matériau de magnétostriction sur la longueur du second matériau de magnétostriction dans la première direction.

6. Procédé (1200) de libération d'un panneau éjectable et d'un couvercle souple d'une glissière d'évacuation dans un aéronef, le procédé comprenant :
la fourniture d'un système de libération d'un panneau (110) éjectable et du couvercle (206) souple d'une glissière d'évacuation dans un aéronef selon une quelconque revendication précédente ;
la réception, par le dispositif de commande, d'une indication qu'une opération d'évacuation a commencé ; et
en réponse à la réception de l'indication que l'opération d'évacuation a commencé :
l'envoi, par un dispositif de commande, d'un premier signal au premier actionneur qui magnétise le premier matériau de magnétostriction à l'intérieur du premier actionneur, libérant ainsi le panneau éjectable d'un compartiment de panneau dans lequel se trouve la glissière d'évacuation ;
et
l'envoi, par le dispositif de commande, d'un second signal au second actionneur qui magnétise le second matériau de magnétostriction à l'intérieur du second actionneur, libérant ainsi la boucle clé de laçage associée au couvercle souple dans lequel se trouve la glissière d'évacuation dans le compartiment de panneau.
